# EUROPÄISCHE PATENTANMELDUNG

(11) **EP 4 726 230 A1**
(43) Veröffentlichungstag der Anmeldung: **15.04.2026**
(21) Anmeldenummer: 24205796.6
(22) Anmeldetag: 10.10.2024
(51) Int. Cl.: F16D 3/58, F16D 3/74

(54) **KUPPLUNG UND VERFAHREN ZUM BERÜHRUNGSLOSEN ERFASSEN EINES DREHMOMENTS**

(71) Anmelder: Flender GmbH, 46395 Bocholt (DE)
(72) Erfinder: KLEINEWEGEN, Stefan, 46395 Bocholt (DE)
(74) Vertreter: Michalski Hüttermann & Partner Patentanwälte mbB

(57) **Zusammenfassung**

Kupplung 10 für einen drehmomentübertragenden Antriebsstrang mit einer Drehachse A_{D}, mit einem unter Drehmomentübertragung torsionsweichen Kupplungselement 12, wobei auf dem Kupplungselement 12 ein erster Magnet 20 und zumindest ein zweiter Magnet 30 axial beabstandet an entgegengesetzten Endbereichen 14, 16 des Kupplungselements 12 angeordnet sind, zur berührungslosen Erfassung eines über das Kupplungselement 12 übertragenen Drehmoments. Die Drehmomenterfassung erfolgt berührungslos und für den ersten und den zweiten Magneten 20, 30 keine Stromversorgung erforderlich ist.

## Beschreibung

Die Erfindung betrifft eine Kupplung, die dazu ausgebildet ist, ein übertragenes Drehmoment berührungslos zu erfassen. Die Erfindung betrifft ferner ein Verfahren zum Bestimmen eines über eine Kupplung übertragenen Drehmoments. Ebenfalls betrifft die Erfindung eine Industrie-Applikation mit einer solchen Kupplung

Die Bestimmung eines Drehmoments erfolgt bisher beispielsweise über Dehnmessstreifen, die auf das Kupplungselements, über das das Drehmoment übertragen wird, appliziert werden. Die Dehnmessstreifen unterliegen während des Betriebs einer Dehnung, infolge der sich der elektrische Widerstand ändert. Durch einen Kalibriervorgang wird die Widerstandsänderung in ein Verhältnis zu dem anliegenden bzw. übertragenen Drehmoment gesetzt. Diese Art der Drehmomentmessung erfordert eine Stromversorgung für den auf dem rotierenden Kupplungselement angebrachten Dehnmessstreifen, was aufwendig und teuer ist. Es besteht das ständige Bedürfnis die Drehmomenterfassung an einem Kupplungselement zu vereinfachen.

Es ist die Aufgabe der Erfindung Maßnahmen aufzuzeigen, die eine vereinfachten Drehmomenterfassung an einem Kupplungselement ermöglichen.

Die Lösung der Aufgabe erfolgt durch eine Kupplung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Kupplung für einen drehmomentübertragenden Antriebsstrang mit einer Drehachse A_{D}, umfassend ein unter Drehmomentübertragung torsionsweiches Kupplungselement, wobei auf dem Kupplungselement ein erster Magnet und zumindest ein zweiter Magnet axial beabstandet an entgegengesetzten Endbereichen des Kupplungselements angeordnet sind, zur berührungslosen Erfassung eines über das Kupplungselement übertragenen Drehmoments.

Bei dem Kupplungselement kann es sich beispielsweise um ein Wellenelement in einem Antriebsstrang handeln. Auf dem Kupplungselement sind die beiden Magnete derart weit axial beabstandet, dass sich das axiale Stück zwischen den beiden Magneten um ein ausreichend großes Winkelmaß verdrehen kann, dass dieses Winkelmaß eindeutig und reproduzierbar über geeignete Erfassungsmittel erfasst werden kann. Das axiale Abstandsmaß zwischen den beiden Magneten ist zweckmäßigerweise abgestimmt auf die Torsionssteifigkeit des Kupplungselements in diesem Bereich. Im Allgemeinen gilt, dass eine hohe Torsionssteifigkeit einen größeren axialen Abstand zwischen den beiden Magneten erfordert. Zwischen dem ersten und dem zweiten Magneten stellt sich im bestimmungsgemäßen Betrieb unter Drehmomentbelastung in Umfangsrichtung ein Versatz ein. Der erste Magnet ist somit in Umfangsrichtung relativ zu dem zweiten Magneten infolge der Torsion des Kupplungselements bei Drehmomentübertragung beweglich. Bei einem höheren übertragenen Drehmoment stellt sich ein größerer umfänglicher Versatz zwischen beiden Magneten ein, bei einer Reduzierung des übertragenen Drehmoments verringerter sich der umfängliche Versatz zwischen beiden Magneten. Da die Drehmomenterfassung berührungslos erfolgt, ist für den ersten und den zweiten Magneten keine Stromversorgung erforderlich. Es muss folglich keine Stromversorgung hin zu einem drehenden Bauteil hergestellt werden. Das Applizieren und Kalibrieren von Dehnungsmessstreifen entfallen. Die erfindungsgemäße Kupplung bietet eine präzise Erfassung eines übertragenen Drehmoments mit einer reduzierten Bauteilanzahl, die kosteneffizient herstellbar und montierbar sind.

In einer bevorzugten Ausgestaltung ist das Kupplungselement torsionsweich linear elastisch ausgebildet. Hierdurch ist eine gute und sichere Kalibrierung möglich. Bei dem Kupplungselement handelt es sich nicht um ein Verschleißteil, sondern die Torsionssteifigkeit wird derart ausgelegt, dass hohe Drehmomente übertragen werden können und zwar innerhalb des linear-elastischen Bereichs.

In einer weiterhin bevorzugten Ausgestaltung bildet das Kupplungselement an den entgegengesetzten Endbereichen Anschlussflansche zum Anschluss von Eingangswelle und/oder Ausgangswelle aus und die beiden Magnete jeweils im Bereich der Anschlussflansche angeordnet sind. Hierbei kann vorgesehen sein, dass die Anschlussflansche zur Verschraubung an eine Antriebswelle bzw. eine Abtriebswelle dienen. Die Anschlussflansche können auch elastische Kupplungselemente enthalten.

Die Aufgabe wird ferner gelöst durch ein System, mit einer Kupplung und einer Sensoreinrichtung, wobei die Sensoreinrichtung mindestens einen Sensor zum Erfassen einer physikalischen Größe eines Magnetfeldes aufweist und die Kupplung wie beschrieben ausgebildet ist. Hierbei kann die Sensoreinrichtung auch eine Erfassungs- und Auswerteinheit umfassen, über die die Sensorsignale erfasst, gegebenenfalls aufbereitet werden und für eine weitere Anwendung bereitgestellt werden.

In einer bevorzugten Ausgestaltung des Systems ist die Sensoreinrichtung stationär das Kupplungselement zumindest teilweise umgebend angeordnet, zum zumindest teilweisen Erfassen der physikalischen Größe des Magnetfeldes. Die Sensoreinrichtung ist derart angeordnet, dass sie die beiden mit dem Kupplungselement rotierenden Magnet erfassen kann. In einer konkreten Ausgestaltung ist bevorzugt, dass die Sensoreinrichtung zwei, jeweils den auf dem Kupplungselement angeordneten Magneten zugeordnete Sensoren aufweist, wobei insbesondere vorgesehen sein kann, dass die Sensoreinrichtung zwei, jeweils den auf dem Kupplungselement angeordneten Magneten zugeordnete Sensoren aufweist.

Eine bevorzugt räumliche Anordnung kann vorsehen, dass in einer Umfangsposition des Kupplungselements die Sensoren der Sensoreinrichtung radial außerhalb der auf dem Kupplungselement angeordneten Magnete positioniert sind. Zweckmäßigerweise kann die Anordnung derart getroffen sein, die Magnete auf dem Kupplungselement und die Sensoren der Sensoreinrichtung jeweils auf einer Linie parallel zu der Drehachse A_{D} angeordnet sind. Die Sensoren können als Hall-Sensoren ausgebildet sein.

Die Aufgabe wird zudem gelöst durch ein Verfahren zum Bestimmen eines über eine Kupplung übertragenen Drehmoments, bei dem ein in seiner Torsionssteifigkeit bekanntes Kupplungselement bereitgestellt wird, auf entgegengesetzten Endbereichen des Kupplungselements auf einem Umfang ein jeweiliger Referenzpunkt festgelegt wird und während einer Drehmomentübertragung aus einem Vergleich der Umfangspositionen der Referenzpunkte und der Torsionssteifigkeit das übertragene Drehmoment bestimmt wird. Die Drehmomentübertragung erfolgt zweckmäßigerweise während eines bestimmungsgemäßen Betriebs der Kupplung, wobei währenddessen die Umfangspositionen der Referenzpunkte berührungslos ermittelt werden.

Schließlich wird die Aufgabe gelöst durch eine Industrie-Applikation, umfassend eine Antriebseinheit mit einer Ausgangswelle und einer Abtriebseinheit mit einer Eingangswelle, wobei die Eingangswelle und die Ausgangswelle über eine Kupplung miteinander drehmomentübertragend verbunden sind, dadurch gekennzeichnet, dass die Kupplung wie beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine prinzipmäßige Darstellung einer Industrie-Applikation mit einer Kupplung,
Fig. 2, 3a), 3b): Ausführungsformen einer Kupplung mit torsionsweichem Kupplungselement und
Fig. 4: Verfahrensablauf zum Bestimmen eines über eine Kupplung übertragenen Drehmoments.

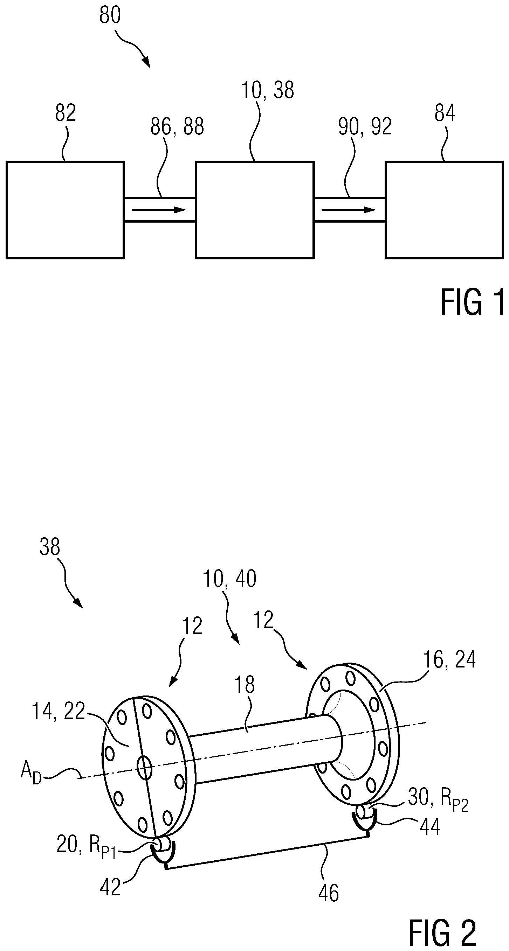

In der Figur 1 ist zunächst eine Industrie-Applikation 80, bei der eine Ausführung der beschriebenen Kupplung 10 oder des Kupplungssystems 38 samt Kupplung 10 und Sensoreinrichtung 40 zum Einsatz kommt, dargestellt. Die Industrie-Applikation 80 umfasst ein Antriebsmittel 82, das beispielsweise als Elektromotor, als Verbrennungsmotor oder als Hydraulikmotor ausgebildet ist. Das Antriebsmittel 82 ist drehmomentübertragend mit der Kupplung 10 oder dem System 38 gekoppelt, die wiederum mit einer mechanischen Anwendung 84 verbunden ist. Das Antriebsmittel 82 ist zum Abgeben einer Antriebsleistung 86 ausgebildet, die über eine Leistungswelle 88 der Kupplung 10 zugeführt wird. Durch die Kupplung 10 wird die eingehende Antriebsleistung 86 bezüglich Drehzahl und Drehmoment als Ausgangsleistung 90 über eine Leistungswelle 21 an die mechanische Anwendung 84 weitergeleitet.

Die Figur 2 zeigt ein Kupplungssystem 38, das eine drehbare Kupplung 10 und eine gegenüber der Kupplung stationäre Sensoreinrichtung 40 umfasst. Die Kupplung 10 umfasst ein als Torsionswelle ausgebildetes und unter Drehmomentübertragung torsionsweiches Kupplungselement 12, wobei es insbesondere torsionsweich linear elastisch ausgebildet ist. Das Kupplungselement 12 ist entlang der Drehachse A_{D} in axialer Richtung ausgerichtet. Auf dem Kupplungselement 12 sind axial beabstandet und an entgegengesetzten Endbereichen 14, 16 ein ersten Magnet 20 und eine zweiter Magnet 30 angeordnet. Das Kupplungselement 12 bildet vorliegend an entgegengesetzten Endbereichen 14, 16 Anschlussflansche 22, 24 zum entsprechenden Anschluss von Eingangswelle 88 und Ausgangswelle 21 aus. Axial zwischen den Anschlussflanschen 22, 24 befindet sich das eigentliche Torsionselement 18. Die beiden Magnete 20, 30 sind vorliegend auf einem Außenumfangsbereich der Anschlussflansche 22, 24 angeordnet. Infolge der Fähigkeit des Torsionselements 18 unter Drehmomentbelastung bzw. -übertragung zu tordieren, sind die beiden Magnete 20 in Umfangsrichtung relativ zueinander beweglich.

Die Sensoreinrichtung 40 weist vorliegend zwei Sensoren 42, 44 zum Erfassen einer physikalischen Größe eines Magnetfeldes auf. Die beiden Sensoren 42, 44 korrespondieren derart mit den beiden Magneten 20, 30, dass der eine Sensor 42, 44 in der Lage ist das Magnetfeld des einen Magneten 20, 30 und der andere Sensor 44, 42 in der Lage ist das Magnetfeld des anderen Sensors 44,42 zu erfassen. Die Sensoren 42, 44 sind radial außerhalb der Magnete 20, 30 stationär auf einem geeigneten Trägerelement angeordnet. Zweckmäßigerweise sind die Magnete 20, 30 auf dem Kupplungselement 12 und die Sensoren 42, 44 der Sensoreinrichtung 40 jeweils auf einer Linie parallel zu der Drehachse A_{D} angeordnet. Mit dem Bezugszeichen 46 ist ein Datenerfassungsmodul bezeichnet, über das die Sensordaten erfasst und beispielsweise an eine übergeordnete Steuerungseinheit weitergegeben werden.

Wie bereits beschrieben, erfährt das Kupplungselement 12 bzw. das Torsionselement 18 während eines bestimmungsgemäßen Betriebs der Kupplung 10, der eine Rotation und eine Drehmomentübertragung beinhaltet, so dass sich die relative Umfangsposition der Magnete 20, 30 zueinander ändert. Diese Änderung der relative Umfangsposition der Magnete 20, 30 zueinander wird von den stationär angeordneten Sensoren 42, 44 erfasst. Die Änderung der relativen Umfangsposition der Magnete zueinander bedeutet, dass sich zwischen den Magneten 20, 30 ein Verdrehwinkel einstellt bzw. sich ein Verdrehwinkel im zeitlichen Verlauf einer Drehmomentübertragung ändert. Hierbei ist insbesondere von Vorteil, dass es sich bei den Magneten 20, 30 um passive Bauteil ohne das Erfordernis einer Stromversorgung handelt, so dass bei der beschriebenen Kupplung 10 keine solche Stromversorgung auf das im Betrieb sich drehende Kupplungselement 12 geführt werden muss.

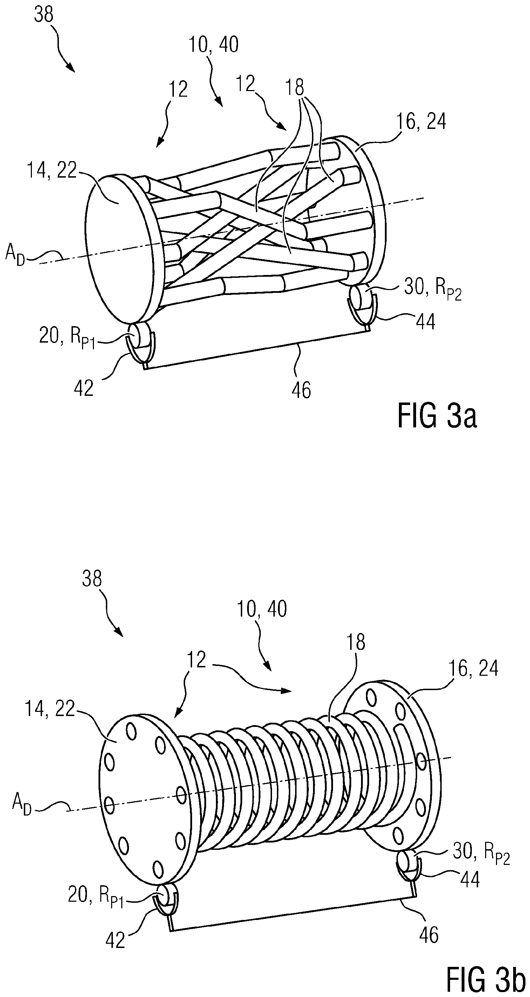

In den Figuren 3a) und 3b) sind weitere mögliche Ausgestaltungen der Kupplung 10 gezeigt, insbesondere des Torsionselements 18. Bei der Ausführung der Figur 3a) ist das Torsionselement 18 durch eine Kombination aus Zugstäben und Druckstäben ausgeführt. Bei der Ausführung der Figur 3b) ist das Torsionselement 18 durch eine Spiralfeder ausgeführt.

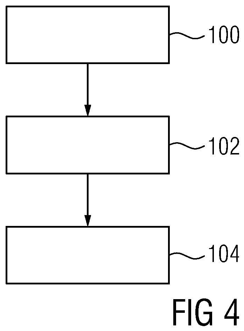

In der Figur 4 ist der Ablauf eines Verfahrens zum Bestimmen eines über eine Kupplung 10 übertragenen Drehmoments dargestellt. In Verfahrensschritt 100 wird ein in seiner Torsions- bzw. Federsteifigkeit bekanntes Kupplungselement 12 bereitgestellt. In Verfahrensschritt 102 wird auf entgegengesetzten Endbereichen 14, 16 des Kupplungselements 12 auf einem Umfang ein jeweiliger Referenzpunkt R_{P1}, R_{P2} festgelegt. In Verfahrensschritt 104 wird eine Drehmomentübertragung über die Kupplung 10 eingeleitet und während der Drehmomentübertragung aus einem Vergleich der Umfangspositionen der Referenzpunkte R_{P1}, R_{P2} und der Torsionssteifigkeit das übertragene Drehmoment bestimmt. Die Drehmomentübertragung über die Kupplung 10 erfolgt während ihres bestimmungsgemäßen Betriebs. Insbesondere werden die Umfangspositionen der Referenzpunkte R_{P1}, R_{P2} berührungslos ermittelt, indem in den Referenzpunkten R_{P1}, R_{P2} die Magnete 20, 30 angeordnet werden.

### Bezugszeichenliste

- 10: Kupplung
- 12: Kupplungselement
- 14: Endbereich
- 16: Endbereich
- 18: Torsionselement
- 20: Magnet
- 22: Anschlussflansch
- 24: Anschlussflansch
- 30: Magnet
- 38: System
- 40: Sensoreinrichtung
- 42: Sensor
- 44: Sensor
- 46: Datenerfassungsmodul
- 80: Industrie-Applikation
- 82: Antriebsmittel
- 84: mechanischen Anwendung
- 86: Antriebsleistung
- 88: Leistungswelle
- 90: Ausgangsleistung
- 92: Leistungswelle

## Patentansprüche

1. Kupplung (10) für einen drehmomentübertragenden Antriebsstrang mit einer Drehachse A_{D}, umfassend
ein unter Drehmomentübertragung torsionsweiches Kupplungselement (12),
wobei auf dem Kupplungselement (12) ein erster Magnet (20) und zumindest ein zweiter Magnet (30) axial beabstandet an entgegengesetzten Endbereichen (14, 16) des Kupplungselements (12) angeordnet sind, zur berührungslosen Erfassung eines über das Kupplungselement (12) übertragenen Drehmoments.

2. Kupplung (10) nach Anspruch 1, **dadurch gekennzeichnet, dass** der erste Magnet (20) in Umfangsrichtung relativ zu dem zweiten Magneten (30) infolge einer Torsion des Kupplungselements (12) bei Drehmomentübertragung beweglich ist.

3. Kupplung (10) nach Anspruch 1 oder 2, **dadurch gekennzeichnet, dass** Kupplungselement (12) torsionsweich linear elastisch ausgebildet ist.

4. Kupplung (10) nach einem der Ansprüche 1 bis 3, **dadurch gekennzeichnet, dass** das Kupplungselement (10) an den entgegengesetzten Endbereichen (14, 16) Anschlussflansche (22, 24) zum Anschluss von Eingangswelle und/oder Ausgangswelle ausbildet und die beiden Magnete jeweils im Bereich der Anschlussflansche (22, 24) angeordnet sind.

5. Kupplungssystem (38), umfassend eine Kupplung (10) und eine Sensoreinrichtung (40), wobei die Sensoreinrichtung (40) mindestens einen Sensor (42) zum Erfassen einer physikalischen Größe eines Magnetfeldes aufweist und die Kupplung (10) nach einem der vorangegangenen Ansprüche ausgebildet ist.

6. Kupplungssystem nach Anspruch 5, **dadurch gekennzeichnet, dass** die Sensoreinrichtung (40) stationär das Kupplungselement (12) zumindest teilweise umgebend angeordnet ist, zum zumindest teilweisen Erfassen der physikalischen Größe des Magnetfeldes.

7. Kupplungssystem nach Anspruch 5 oder 6, **dadurch gekennzeichnet, dass** die Sensoreinrichtung (40) zwei, jeweils den auf dem Kupplungselement (12) angeordneten Magneten (20, 30) zugeordnete Sensoren (42, 44) aufweist.

8. Kupplungssystem nach Anspruch 7, **dadurch gekennzeichnet, dass** in einer Umfangsposition des Kupplungselements (12) die Sensoren (42, 44) der Sensoreinrichtung (40) radial außerhalb der auf dem Kupplungselement (12) angeordneten Magnete (20, 30) positioniert sind.

9. Kupplungssystem nach Anspruch 7 oder 8, **dadurch gekennzeichnet, dass** die Magnete (20, 30) auf dem Kupplungselement (12) und die Sensoren (42, 44) der Sensoreinrichtung (40) jeweils auf einer Linie parallel zu der Drehachse A_{D} angeordnet sind.

10. System nach einem der Ansprüche 5 bis 9, **dadurch gekennzeichnet, dass** die Sensoren (42, 44) als Hall-Sensoren ausgebildet sind.

11. Verfahren zum Bestimmen eines über eine Kupplung (10) übertragenen Drehmoments, bei dem
ein in seiner Torsionssteifigkeit bekanntes Kupplungselement (12) bereitgestellt wird, auf entgegengesetzten Endbereichen (14, 16) des Kupplungselements (12) auf einem Umfang ein jeweiliger Referenzpunkt (P_{R}) festgelegt wird und
während einer Drehmomentübertragung aus einem Vergleich der Umfangspositionen der Referenzpunkte (P_{R}) und der Torsionssteifigkeit das übertragene Drehmoment bestimmt wird.

12. Verfahren nach Anspruch 11, **dadurch gekennzeichnet, dass** die Drehmomentübertragung während eines bestimmungsgemäßen Betriebs der Kupplung (10) erfolgt.

13. Verfahren nach Anspruch 11 oder 12, **dadurch gekennzeichnet, dass** die Umfangspositionen der Referenzpunkte (P_{R}) berührungslos ermittelt werden.

14. Verfahren nach einem der Ansprüche 11 bis 13, **dadurch gekennzeichnet, dass** in den Referenzpunkten (P_{R}) Magnete angeordnet werden.

15. Industrie-Applikation (80), umfassend eine Antriebseinheit (82) mit einer Ausgangswelle (83) und einer Abtriebseinheit (84) mit einer Eingangswelle (85), wobei die Eingangswelle (85) und die Ausgangswelle (83) über eine Kupplung (10) miteinander drehmomentübertragend verbunden sind, **dadurch gekennzeichnet, dass** die Kupplung (10) nach einem der Ansprüche 1 bis 10 ausgebildet ist.
